# EUROPEAN PATENT SPECIFICATION

(11) **EP 3 640 562 B1**
(45) Date of publication and mention of the grant of the patent: **06.01.2021**
(21) Application number: 18853718.7
(22) Date of filing: 30.08.2018
(51) Int. Cl.: F24F 13/24, F25B 41/06, F25B 13/00, F25B 41/04, F24F 12/00, F24F 13/00

(54) **HEAT RECOVERY MULTI-SPLIT AIR CONDITIONING SYSTEM WITH A MODE SWITCHER AND CONTROL METHOD**
MULTI-SPLIT-KLIMAANLAGE MIT WÄRMERÜCKGEWINNUNG MIT EINEM MODUS-UMSCHALTER UND STEUERUNGSVERFAHREN DAFÜR
SYSTÈME DE CONDITIONNEMENT D'AIR À FENTES MULTIPLES À RÉCUPÉRATION DE CHALEUR AVEC UN COMMUTATEUR DE MODE ET PROCÉDÉ DE COMMANDE

(30) Priority: 11.09.2017 CN 201710811336
(43) Date of publication of application: 22.04.2020
(73) Proprietor: Gree Electric Appliances (Wuhan) Co., Ltd., Wuhan, Hubei 430000 (CN); Gree Electric Appliances, Inc. of Zhuhai, Zhuhai, Guangdong 519070 (CN)
(72) Inventor: HUANG, Zhiguang, Zhuhai Guangdong 519070 (CN); ZHANG, Shiqiang, Zhuhai Guangdong 519070 (CN); WU, Lianfa, Zhuhai Guangdong 519070 (CN); XUE, Handong, Zhuhai Guangdong 519070 (CN); FAN, Fan, Zhuhai Guangdong 519070 (CN); ZHOU, Bing, Zhuhai Guangdong 519070 (CN); JIAO, Huachao, Zhuhai Guangdong 519070 (CN)
(74) Representative: Nevett, Duncan
(86) International application number: PCT/CN2018/103232
(87) International publication number: WO 2019/047765

(56) References cited:
- EP-A2- 1 921 400
- EP-A2- 2 354 723
- CN-A- 101 131 266
- CN-A- 102 072 531
- CN-A- 102 313 397
- CN-A- 102 425 882
- CN-A- 107 477 824
- CN-U- 201 954 856
- CN-Y- 200 943 972
- KR-A- 20100 036 788

## Description

### TECHNICAL FIELD

The present invention relates to the field of air conditioning, and in particular, to a mode switcher, a heat recovery multi-split air conditioning system and a control method.

### BACKGROUND

A heat recovery multi-split air conditioning system is an air conditioning equipment, which can meet the simultaneous refrigeration and heating requirements of multiple rooms, and can convert the heat exchange energy of partial space into other spaces in the system for utilization so as to achieve the purpose of energy recovery, and reasonable transfer and utilization of energy in the air conditioning system are achieved.

In the heat recovery multi-split air conditioning system, a mode switcher is a very important functional component, it can not only replace a branch pipe, but also is responsible for a mode switching function of the unit running. In the existing mode switcher, a solenoid valve is mainly used to switch a liquid pipe and a high/low pressure gas pipe, due to the large differential pressure between the front and back of a valve body of the solenoid valve, when mode switching is performed, the noise at the moment of switching the valve body is very obvious. On the other hand, the sound of liquid flow is more obvious during the operation of the system. Therefore, how to effectively reduce the operation noise of the heat recovery multi-split air conditioning system has become a technical problem that needs to be solved urgently.

There have been several patents or applications that cover variations of the mode switcher and the heat recovery multi-split air conditioning system. For example, the patent application No. EP2354723A2 discloses a refrigerant system is provided. The refrigerant system may use an electronic expansion valve that electronically controls an opening degree thereof, as a high-pressure valve and a low-pressure valve to selectively block a high-pressure branch valve and a low-pressure branch valve. Accordingly, noise transmitted to an interior space may be minimized when the operation mode of the refrigerant system is switched. In addition, the structure of the refrigerant system may be simplified.

Likewise, the patent application No.KR20100036788A discloses a multi-type air conditioner and an operation method thereof are provided to prevent the sudden change of coolant flow and to allow coolant to flow slowly. The multi-type air conditioner comprises an outdoor unit, indoor units, and a distribution unit. The outdoor unit comprises a compressor, an outdoor heat exchanger, and a cooling/heating switching valve. The indoor unit comprises an indoor heat exchanger. The distribution unit is connected to the outdoor unit and indoor units to control the refrigerant flow. The distribution unit comprises a low pressure gas pipe, a high pressure gas pipe, a liquid pipe, a low pressure electric expansion valve, a high pressure electric expansion valve, and a controller. The low pressure gas pipe is connected to the indoor unit and the outdoor unit. The high pressure gas pipe is connected to the indoor unit and the outdoor unit. The liquid pipe is connected to the outdoor unit and the indoor unit. The low pressure electric expansion valve controls the refrigerant flow between the low pressure gas pipe and the indoor unit. The high pressure electric expansion valve controls the refrigerant flow between the high pressure gas pipe and the indoor unit. The controller controls the opening degree of the low pressure electric expansion valve and the high pressure electric expansion valve. The patent applications KR20100036788A and further EP2354723A2 disclose a heat recovery multi-split air conditioning system according to the preamble of claim 1.

### SUMMARY

One object of the present application is to provide a mode switcher and a control method, which can effectively reduce the noise when air conditioning mode is switched by the mode switcher.

Another object of the present application is to provide a heat recovery multi-split air conditioning system, which can effectively reduce the running noise of the heat recovery multi-split air conditioning system.

To achieve one of the foregoing objects, the present invention provides a heat recovery multi-split air conditioning system according to claim 1, the heat recovery multi-split air conditioning system comprising an outdoor unit, an indoor unit and a mode switcher, wherein the mode switcher includes at least one mode conversion branch, the outdoor unit is connected with various mode conversion branches in the mode switcher through a main liquid pipe, a main high-pressure gas pipe and a main low-pressure gas pipe, and the mode conversion branches are connected with a corresponding indoor unit through a branch liquid pipe and a branch gas pipe, and wherein the mode conversion branch includes: a liquid pipe section, a high-pressure gas pipe section and a low-pressure gas pipe section, both ends of the liquid pipe section are respectively configured to connect the main liquid pipe and the branch liquid pipe, one end of the high-pressure gas pipe section and one end of the low-pressure gas pipe section are respectively configured to connect the main high-pressure gas pipe and the main low-pressure gas pipe, another end of the high-pressure gas pipe section and another end of the low-pressure gas pipe section are configured to both connected with the branch gas pipe, the mode switcher further includes a high-pressure electronic expansion valve and a low-pressure electronic expansion valve, the high-pressure electronic expansion valve and the low-pressure electronic expansion valve are respectively arranged in series in the high-pressure gas pipe section and the low-pressure gas pipe section, wherein the high-pressure electronic expansion valve and the low-pressure electronic expansion valve are configured to be gradually opened and closed during air conditioning mode switching to reduce a differential pressure between before and after a mode conversion operation, the liquid pipe section is further connected with a supercooling pipe in series, the heat recovery multi-split air conditioning system further includes a first bypass pipeline led from the main liquid pipe to the main low-pressure gas pipe, the first bypass pipeline is connected with the supercooling pipe and performs heat exchange, and a filter and a supercooling throttling unit are arranged in series in the first bypass pipeline.

In some embodiments, the mode conversion branch further includes a high-pressure solenoid valve and a low-pressure solenoid valve, and the high-pressure solenoid valve and the low-pressure solenoid valve are respectively connected in parallel with the high-pressure electronic expansion valve and the low-pressure electronic expansion valve through bypass pipelines.

In some embodiments, the liquid pipe section is connected with the supercooling pipe in series so as to perform heat exchange on a refrigerant of the liquid pipe section and a refrigerant led from the main liquid pipe to the main low-pressure gas pipe.

In some embodiments, the mode conversion branches are connected in parallel, in series, or in series-parallel form through the main liquid pipe, the main high-pressure gas pipe and the main low-pressure gas pipe.

In some embodiments, muffler is arranged on at least one of the main high-pressure gas pipe and the main low-pressure gas pipe connecting the mode switcher.

In some embodiments, the heat recovery multi-split air conditioning system further includes a second bypass pipeline arranged between the main high-pressure gas pipe and the main low-pressure gas pipe, and a gas bypass solenoid valve and a throttling unit are arranged in series in the second bypass pipeline.

In order to achieve one of the above objects, the present invention further provides a control method according to claim 7 based on the foregoing mode switcher, including at least one of the following steps:
upon receiving a switching instruction of switching from a cooling mode to a heating mode, causing the low-pressure electronic expansion valve to gradually decrease the opening degree at a preset step size, until the low-pressure electronic expansion valve is closed; and then causing the high-pressure electronic expansion valve to be opened, adjusting the high-pressure electronic expansion valve to a preset initial opening degree, and after maintaining the preset initial opening degree for a preset time length, causing the high-pressure electronic expansion valve to gradually increase the opening degree at the preset step size, until the high-pressure electronic expansion valve is opened to a maximum opening degree;
upon receiving a switching instruction of switching from the heating mode to the cooling mode, causing the high-pressure electronic expansion valve to gradually decrease the opening degree at a preset step size, until the high-pressure electronic expansion valve is closed; and then causing the low-pressure electronic expansion valve to be opened, adjusting the low-pressure electronic expansion valve to a preset initial opening degree, and after maintaining the preset initial opening degree for a preset time length, causing the low-pressure electronic expansion valve to gradually increase the opening degree at the preset step size, until the low-pressure electronic expansion valve is opened to a maximum opening degree.

In some embodiments, the mode conversion branch further includes a high-pressure solenoid valve and a low-pressure solenoid valve, and the high-pressure solenoid valve and the low-pressure solenoid valve are respectively connected in parallel with the high-pressure electronic expansion valve and the low-pressure electronic expansion valve through bypass pipelines; and the control method further includes:
upon receiving the switching instruction of switching from the cooling mode to the heating mode, further causing the low-pressure solenoid valve to be closed, and opening the high-pressure solenoid valve when causing the high-pressure electronic expansion valve to be opened to the maximum opening degree; or
upon receiving the switching instruction of switching from the heating mode to the cooling mode, further causing the high-pressure solenoid valve to be closed, and opening the low-pressure solenoid valve when causing the low-pressure electronic expansion valve to be opened to the maximum opening degree.

Based on the above technical solutions, in the present invention, the electronic expansion valves are arranged in series in the high-pressure gas pipe section and the low-pressure gas pipe section in the mode conversion branch of the mode switcher, and the differential pressure of the valve refrigerant between before and after the mode switching operation is reduced by using the gradual opening and closing of the electronic expansion valves during the air conditioning mode switching, thereby reducing the noise caused by the differential pressure at the moment of switching; and when the mode switcher of the present application is applied to the heat recovery multi-split air conditioning system, the running noise of the heat recovery multi-split air conditioning system can be effectively reduced.

### BRIEF DESCRIPTION OF THE DRAWINGS

The drawings described herein are used for providing a further understanding of the present invention and constitute a part of the present patent. Exemplary embodiments of the present invention and illustrations thereof are used for explaining the present invention, but constitute no limitation to the present invention, which is defined in the appended claims.

In the drawings:
Fig. 1 is a structural schematic diagram of one embodiment of a heat recovery multi-split air conditioning system of the present application.
Fig. 2 is a structural schematic diagram of another embodiment of the heat recovery multi-split air conditioning system of the present application.
Fig. 3 is a schematic diagram of a flow direction of a refrigerant when a certain mode conversion branch is switched to a heating mode in an embodiment of a mode switcher of the present application.
Fig. 4 is a schematic diagram of a flow direction of a refrigerant when a certain mode conversion branch is switched to a cooling mode in an embodiment of a mode switcher of the present application.
Fig. 5 to Fig. 7 are respectively schematic diagrams of parallel, series and series-parallel connection forms of various mode conversion branches in an embodiment of a mode switcher of the present application.

### DETAILED DESCRIPTION

The technical solution of the present invention defined in the claims is described in further detail below with reference to the drawings and embodiments.

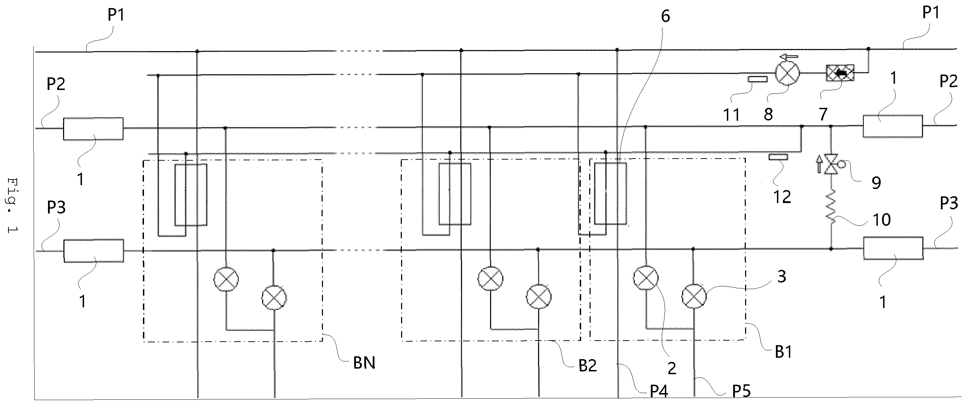

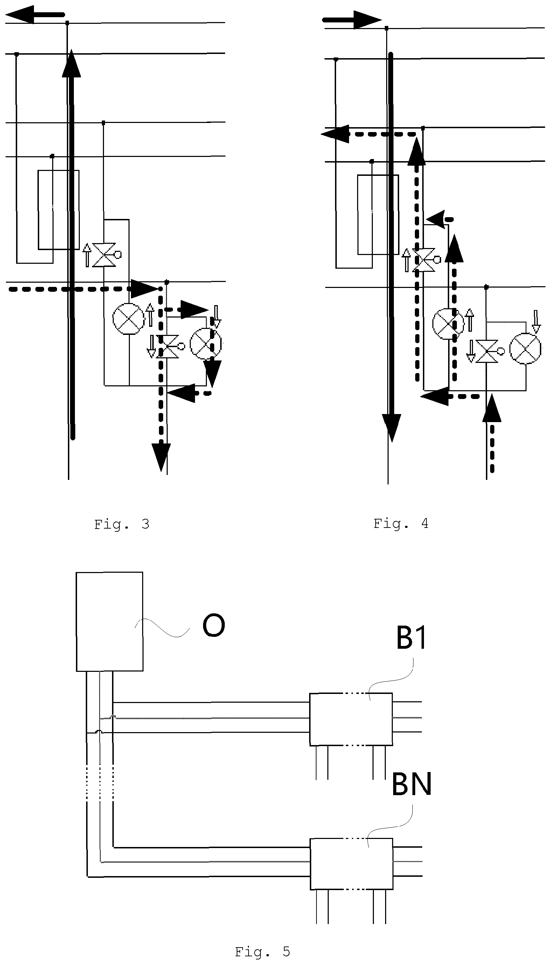

As shown in Fig. 1, it is a structural schematic diagram of one embodiment of a heat recovery multi-split air conditioning system of the present application. Referring to Fig. 5 at the same time, heat recovery multi-split air conditioning system of the present embodiment includes an outdoor unit 0, an indoor unit and a mode switcher. The outdoor unit 0 is connected with various mode conversion branches B1, B2, ..., BN in the mode switcher through a main liquid pipe P1, a main high-pressure gas pipe P3 and a main low-pressure gas pipe P2. The mode conversion branches B1, B2, ..., BN are connected with the corresponding indoor unit (not shown in the figure) through a branch liquid pipe P4 and a branch gas pipe P5. The high pressure and low pressure are relative concepts therein, and their specific values can be selected according to the actual situation.

In the present embodiment, the various mode conversion branches can select corresponding air conditioning modes according to demands, if all mode conversion branches are switched to a cooling mode, it can be referred to as a complete cooling mode, if all mode conversion branches are switched to a heating mode, it can be referred to as a complete heating mode, if a part of mode conversion branches is switched to the cooling mode and the other part of mode conversion branches is switched to the heating mode, heat recovery can be achieved between both parts of mode conversion branches, and thus it can be referred to as a heat recovery mode.

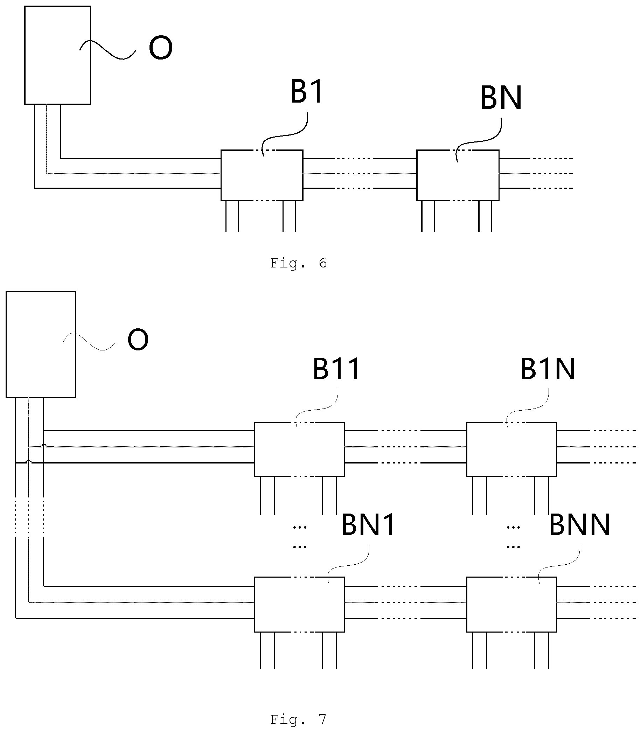

In Fig. 1, the various mode conversion branches adopt a connection mode as shown in Fig. 6, that is, are connected in series through the main liquid pipe P1, the main high-pressure gas pipe P3 and the main low-pressure gas pipe P2. In other embodiments, the various mode conversion branches can also adopt a parallel connection mode as shown in Fig. 5, that is, the mode conversion branches P1, ..., PN are connected in parallel through the main liquid pipe P1, the main high-pressure gas pipe P3 and the main low-pressure gas pipe P2, and this connection mode can make the various mode conversion branches independent of each other and not interfere with each other. Fig. 7 further shows another feasible connection mode of the mode conversion branches, that is, a series-parallel connection mode, the main liquid pipe P1, the main high-pressure gas pipe P3 and the main low-pressure gas pipe P2 led out from the outdoor unit O can be divided into multiple groups of parallel pipelines, each group of parallel pipelines is connected in series with multiple mode conversion branches, and this connection mode can make the mode conversion branches of various parallel pipelines independent of each other and not interfere with each other. For example, the mode conversion branches B11, ..., B1N of the group one of parallel pipelines and the mode conversion branches BN1, ..., BNN of the group N of parallel pipelines are independent of each other and do not interfere with each other. For designers, they can choose the appropriate connection mode of the mode conversion branches according to actual needs.

The composition and operation mechanism of a mode switcher embodiment provided in the present application are described below with reference to Fig. 1. The mode switcher of the present embodiment includes at least one mode conversion branch B1, B2, ..., BN. The mode conversion branch includes: a liquid pipe section, a high-pressure gas pipe section and a low-pressure gas pipe section, both ends of the liquid pipe section are respectively used for connecting a main liquid pipe P1 and a branch liquid pipe P4, one end of the high-pressure gas pipe section and one end of the low-pressure gas pipe section are respectively used for connecting a main high-pressure gas pipe P3 and a main low-pressure gas pipe P2, and another end of the high-pressure gas pipe section and another end of the low-pressure gas pipe section are both connected with a branch gas pipe P5. The mode switcher further includes a high-pressure electronic expansion valve 3 and a low-pressure electronic expansion valve 2, the high-pressure electronic expansion valve 3 and the low-pressure electronic expansion valve 2 are respectively arranged in series in the high-pressure gas pipe section and the low-pressure gas pipe section.

In the existing mode switcher, the high-pressure gas pipe section and the low-pressure gas pipe section are provided with solenoid valves, when air conditioning mode switching is needed, the solenoid valves need to be opened and closed, and the differential pressure between the front and the back of the solenoid valve body is very large, so that the noise at the moment of switching is also very loud. In order to solve the problem of noise at the moment of switching, the present embodiment adopts a manner of respectively disposing the high-pressure electronic expansion valve and the low-pressure electronic expansion valve in the high-pressure gas pipe section and the low-pressure gas pipe section respectively, and adjusting the pressure change at the moment of air conditioning mode switching by means of the adjustability of the opening degrees of the electronic expansion valve. That is to say, during the air conditioning mode switching, the high-pressure electronic expansion valve and the low-pressure electronic expansion valve are gradually opened and closed to reduce the differential pressure between before and after the mode conversion operation.

For the mode switcher, upon receiving a switching instruction of switching from a cooling mode to a heating mode, the mode switcher can control the low-pressure electronic expansion valve 2 to gradually decrease the opening degree at a preset step size, until it is closed, in this way, the differential pressure change between the front and back of the valve body of the low-pressure electronic expansion valve 2 is reduced. Then, the mode switcher controls the high-pressure electronic expansion valve 3 to be opened, adjusts the high-pressure electronic expansion valve to a preset initial opening degree, and after maintaining the preset initial opening degree for a preset time length, controls the high-pressure electronic expansion valve 3 to gradually increase the opening degree at the preset step size, until it is opened to the maximum opening degree. By gradually increasing the opening degree to the maximum opening degree after maintaining the preset initial opening degree for the preset time length, the differential pressure change between the front and back of the valve body of the high-pressure electronic expansion valve 3 is reduced, in this way, by gradually controlling the opening and closing of the low-pressure electronic expansion valve 2 and the high-pressure electronic expansion valve 3 in a heating mode switching process, the noise problem caused by the relatively large differential pressure at the moment of switching the heating mode is reduced or avoided.

Similarly, upon receiving a switching instruction of switching from the heating mode to the cooling mode, the mode switcher controls the high-pressure electronic expansion valve 3 to gradually decrease the opening degree at a preset step size, until it is closed; and then controls the low-pressure electronic expansion valve 2 to be opened, adjusts the low-pressure electronic expansion valve to a preset initial opening degree, and after maintaining the preset initial opening degree for a preset time length, controls the low-pressure electronic expansion valve 2 to gradually increase the opening degree at the preset step size, until it is opened to a maximum opening degree. The noise problem caused by the relatively large differential pressure at the moment of switching the cooling mode is also solved.

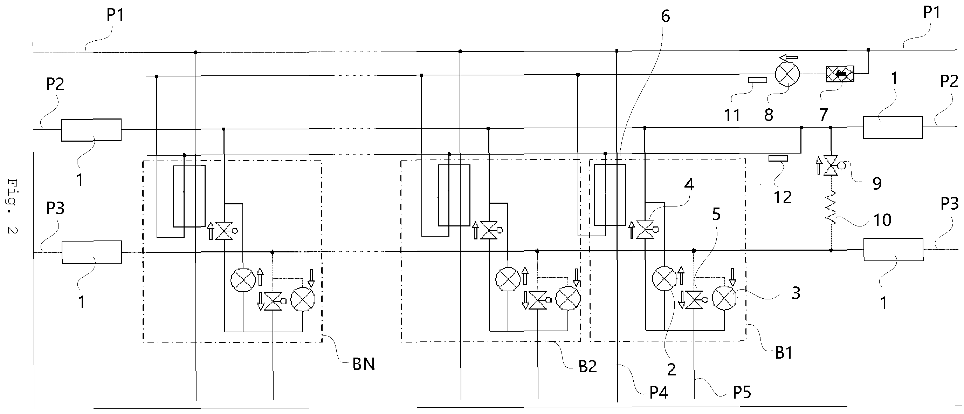

As shown in Fig. 2, it is a structural schematic diagram of another embodiment of the heat recovery multi-split air conditioning system of the present application. Compared with the previous embodiment, the mode conversion branch in the present embodiment further includes a high-pressure solenoid valve 5 and a low-pressure solenoid valve 4. The high-pressure solenoid valve 5 and the low-pressure solenoid valve 4 are connected in parallel with the high-pressure electronic expansion valve 3 and the low-pressure electronic expansion valve 2 through bypass pipelines, respectively.

Upon receiving the switching instruction of switching from the cooling mode to the heating mode, the mode switcher further controls the low-pressure solenoid valve 4 to be closed, and opens the high-pressure solenoid valve 5 when controlling the high-pressure electronic expansion valve 3 to be opened to the maximum opening degree. That is to say, upon receiving the switching instruction of switching from the cooling mode to the heating mode, the mode switcher can control the low-pressure solenoid valve 4 to be closed, and control the low-pressure electronic expansion valve 2 to gradually decrease the opening degree at the preset step size, until it is closed. Then, the mode switcher controls the high-pressure electronic expansion valve 3 to be opened, adjusts the high-pressure electronic expansion valve to the preset initial opening degree, after maintaining the preset initial opening degree for the preset time length, controls the high-pressure electronic expansion valve 3 to gradually increase the opening degree at the preset step size, until it opens to the maximum opening degree, and then opens the high-pressure solenoid valve 5.

Upon receiving the switching instruction of switching from the heating mode to the cooling mode, the mode switcher further controls the high-pressure solenoid valve 5 to be closed, and opens the low-pressure solenoid valve 4 upon controlling the low-pressure electronic expansion valve 2 to be opened to the maximum opening degree. That is to say, upon receiving the switching instruction of switching from the heating mode to the cooling mode, the mode switcher can control the high-pressure solenoid valve 5 to be closed, and control the high-pressure electronic expansion valve 3 to gradually decrease the opening degree at the preset step size, until it is closed. Then, the mode switcher controls the low-pressure electronic expansion valve 2 to be opened, adjusts the low-pressure electronic expansion valve to the preset initial opening degree, after maintaining the preset initial opening degree for the preset time length, controls the low-pressure electronic expansion valve 2 to gradually increase the opening degree at the preset step size, until it is opened to the maximum opening degree, and then opens the low-pressure solenoid valve 4.

For an existing mode sensor, the present embodiment can be obtained by connecting electronic expansion valves in parallel to the solenoid valves in a high-pressure gas path section and a low-pressure gas path section, so it is convenient for reconstruction and is easy to implement.

In the mode conversion branches of the aforementioned two mode switchers, a supercooling pipe 6 is connected in series to the liquid pipe section. The supercooling pipe 6 can perform heat exchange on a refrigerant of the liquid pipe section and a refrigerant led from the main liquid pipe P1 to the main low-pressure gas pipe P2, so as to maintain the stability of the degree of supercooling of the discharge liquid of the liquid pipe, and then running of the electronic expansion valves is more stable, and the comfort of the air conditioning system is improved. In addition, the supercooling pipe 6 can further reduce the degree of supercooling of the refrigerant, and can improve the heat exchange effect of the indoor unit within a certain extent. Correspondingly, the heat recovery multi-split air conditioning system of the present application further includes a first bypass pipeline led from the main liquid pipe P1 to the main low-pressure gas pipe P2. The first bypass pipeline is connected with the supercooling pipe 6 and performs heat exchange with the supercooling pipe 6, and a filter 7 and a supercooling throttling unit 8 are arranged in series in the first bypass pipeline. The supercooling throttling unit 8 is used for reducing pressure of the refrigerant from the main liquid pipe P1 by regulating flow, and the filter 7 can filter impurities in the refrigerant from the main liquid pipe P1. In conjunction with supercooling control, a supercooling gas intake temperature sensing pack 11 can also be arranged at the downstream of the supercooling throttling unit 8, and a supercooling gas exhaust temperature sensing pack 12 is arranged at a tail section of the first bypass pipeline, so that the supercooling throttling unit 8 controls the opening degree according to the sensing data of the supercooling gas intake temperature sensing pack 11 and the supercooling gas exhaust temperature sensing pack 12. In addition, the heat recovery multi-split air conditioning system can further include a second bypass pipeline arranged between the main high-pressure gas pipe P3 and the main low-pressure gas pipe P2, and a gas bypass solenoid valve 9 and a throttling unit 10 are arranged in series in the second bypass pipeline. The bypass pipeline, and the throttling unit 10 and the gas bypass solenoid valve 9 therein can play a role of unloading when the system high-pressure is too high, that is, when the system high-pressure exceeds a predetermined value, the gas bypass solenoid valve 9 is opened to transport the refrigerant on a high pressure side to a low pressure side through the second bypass pipeline so as to reduce the system pressure on the high pressure side.

As above mentioned in the description of the embodiment of the mode switcher, the noise at the moment of switching can be effectively reduced or eliminated by controlling the gradual opening and closing of the electronic expansion valve during the air conditioning mode switching, in consideration that the sound of liquid flow during running of the heat recovery multi-split air conditioning system is also obvious, therefore, mufflers 1 can be added in the embodiment of the heat recovery multi-split air conditioning system, referring to Fig. 1 and Fig. 2, the mufflers 1 can be arranged on at least one side of the main high-pressure gas pipe P3 and at least one side of the main low-pressure gas pipe P2. In this way, the sound of liquid flow during running of the system is suppressed, and in combination with the control of the gradual opening and closing of the electronic expansion valve, the running noise of the heat recovery multi-split air conditioning system is effectively reduced.

On the basis of the foregoing mode switcher embodiment of the present application, the present application further provides a control method based on the foregoing mode switcher, including:
upon receiving a switching instruction of switching from a cooling mode to a heating mode, controlling the low-pressure electronic expansion valve 2 to gradually decrease the opening degree at a preset step size, until the low-pressure electronic expansion valve 2 is closed; and then controlling the high-pressure electronic expansion valve 3 to be opened, adjusting the high-pressure electronic expansion valve to a preset initial opening degree, and after maintaining the preset initial opening degree for a preset time length, controlling the high-pressure electronic expansion valve 3 to gradually increase the opening degree at the preset step size, until the high-pressure electronic expansion valve 3 is opened to a maximum opening degree; and/or
upon receiving a switching instruction of switching from the heating mode to the cooling mode, controlling the high-pressure electronic expansion valve 3 to gradually decrease the opening degree at a preset step size, until the high-pressure electronic expansion valve 3 is closed; and then controlling the low-pressure electronic expansion valve 2 to be opened, adjusting the low-pressure electronic expansion valve to a preset initial opening degree, and after maintaining the preset initial opening degree for a preset time length, controlling the low-pressure electronic expansion valve 2 to gradually increase the opening degree at the preset step size, until the low-pressure electronic expansion valve 2 is opened to a maximum opening degree.

In the embodiment of another mode switcher, the mode conversion branch can further include a high-pressure solenoid valve 5 and a low-pressure solenoid valve 4, and the high-pressure solenoid valve 5 and the low-pressure solenoid valve 4 are respectively connected in parallel with the high-pressure electronic expansion valve 3 and the low-pressure electronic expansion valve 2 through bypass pipelines. Correspondingly, the control method further includes:
upon receiving the switching instruction of switching from the cooling mode to the heating mode, further controlling the low-pressure solenoid valve (4) to be closed, and opening the high-pressure solenoid valve (5) when controlling the high-pressure electronic expansion valve (3) to be opened to the maximum opening degree; and
upon receiving the switching instruction of switching from the heating mode to the cooling mode, further controlling the high-pressure solenoid valve (5) to be closed, and opening the low-pressure solenoid valve (4) when controlling the low-pressure electronic expansion valve (2) to be opened to the maximum opening degree.

Different switching processes of a certain mode conversion branch of the mode switcher in the embodiment as shown in Fig. 2 are illustrated below in combination with Fig. 3 and Fig. 4.

The state shown in Fig. 3 is a refrigerant running state after switching to the heating mode, and the state shown in Fig. 4 is the refrigerant operation state after switching to the cooling mode. Solid lines in Fig. 3 and Fig. 4 indicate the flow directions of the refrigerant in the liquid pipes, and broken lines indicate the flow direction of the refrigerant in the gas pipes. It is assumed that the heating mode shown in Fig. 3 is an initial state, when the mode switcher receives the switching instruction of switching the mode conversion branch to the cooling mode, the high-pressure solenoid valve of a high-pressure gas path section is controlled to close, and the high-pressure electronic expansion valve is controlled to gradually decrease the opening degree at the preset step size (for example, the opening degree is decreased at the step size P1 every S1 seconds), until it is closed. Then, the low-pressure electronic expansion valve of a low-pressure gas path section is controlled to open, the low-pressure electronic expansion valve is adjusted to the preset initial opening degree P0. After maintaining the preset initial opening degree P0 of the low-pressure electronic expansion valve for the preset time length S2, the low-pressure electronic expansion valve is controlled to gradually increase the opening degree at the preset step size (for example, the opening degree is increased at the step size P2 every S3 seconds), until it is opened to the maximum opening degree Pmax, and then the low-pressure solenoid valve is opened. At this time, the refrigerant cycle has been switched to the cooling mode as shown in Fig. 4. In the switching process, through the control of the solenoid valves and the electronic expansion valves, the original instantaneous pressure change process is converted into a relatively long time slow change, so the noise source of the instantaneous differential pressure is fundamentally eliminated, thereby achieving a good denoising effect. Similarly, the control process in which the cooling mode as shown in Fig. 4 is the initial state and then is switched to the heating mode as shown in Fig. 3 can refer to the foregoing description, and thus is not repeated herein again.

Finally, it should be noted that the above-mentioned embodiments are merely used for illustrating the technical solutions of the present invention, rather than limiting them; the scope of the invention is defined in the appended claims.

## Claims

1. A heat recovery multi-split air conditioning system comprising an outdoor unit (O), at least one indoor unit and a mode switcher, wherein the mode switcher comprises at least one mode conversion branch (B1, B2, BN, B11, B1N, BN1, BNN), the outdoor unit (0) is connected with various mode conversion branches (B1, B2, BN, B11, B1N, BN1, BNN) in the mode switcher through a main liquid pipe (P1), a main high-pressure gas pipe (P3) and a main low-pressure gas pipe (P2), and the mode conversion branches (B1, B2, BN, B11, B1N, BN1, BNN) are connected with a corresponding indoor unit through a branch liquid pipe (P4) and a branch gas pipe (P5), and
wherein the mode conversion branch (B1, B2, BN, B11, B1N, BN1, BNN) comprises: a liquid pipe section, a high-pressure gas pipe section and a low-pressure gas pipe section, both ends of the liquid pipe section are respectively connected to the main liquid pipe (P1) and the branch liquid pipe (P4), one end of the high-pressure gas pipe section and one end of the low-pressure gas pipe section are respectively connected to the main high-pressure gas pipe (P3) and the main low-pressure gas pipe (P2), another end of the high-pressure gas pipe section and another end of the low-pressure gas pipe section are both connected with the branch gas pipe (P5), the mode switcher further comprises a high-pressure electronic expansion valve (3) and a low-pressure electronic expansion valve (2), the high-pressure electronic expansion valve (3) and the low-pressure electronic expansion valve (2) are respectively arranged in series in the high-pressure gas pipe section and the low-pressure gas pipe section,
wherein the high-pressure electronic expansion valve (3) and the low-pressure electronic expansion valve (2) are configured to be gradually opened and closed during air conditioning mode switching to reduce a differential pressure between before and after a mode conversion operation, **characterized in that** the liquid pipe section is further connected with a supercooling pipe (6) in series, the heat recovery multi-split air conditioning system further comprises a first bypass pipeline led from the main liquid pipe (P1) to the main low-pressure gas pipe (P2), the first bypass pipeline is connected with the supercooling pipe (6) building an internal heat exchanger to perform heat exchange, and a filter (7) and a supercooling throttling unit (8) are arranged in series in the first bypass pipeline.

2. The heat recovery multi-split air conditioning system according to claim 1, **characterized in that** the mode conversion branch (B1, B2, BN, B11, B1N, BN1, BNN) further comprises a high-pressure solenoid valve (5) and a low-pressure solenoid valve (4), and the high-pressure solenoid valve (5) and the low-pressure solenoid valve (4) are respectively connected in parallel with the high-pressure electronic expansion valve (3) and the low-pressure electronic expansion valve (2) through bypass pipelines.

3. The heat recovery multi-split air conditioning system according to claim 1, **characterized in that** the liquid pipe section is connected with the supercooling pipe (6) in series so as to perform heat exchange on a refrigerant of the liquid pipe section (P1) and a refrigerant led from the main liquid pipe (P1) to the main low-pressure gas pipe (P2).

4. The heat recovery multi-split air conditioning system according to claim 1, **characterized in that** all mode conversion branches (B1, B2, BN, B11, B1N, BN1, BNN) are connected in parallel, in series, or in series-parallel form through the main liquid pipe (P1), the main high-pressure gas pipe (P3) and the main low-pressure gas pipe (P2).

5. The heat recovery multi-split air conditioning system according to claim 1, **characterized in that** muffler (1) is arranged on at least one side of the main high-pressure gas pipe (P3) and the main low-pressure gas pipe (P2) connecting the mode switcher.

6. The heat recovery multi-split air conditioning system according to claim 1, **characterized in that** the heat recovery multi-split air conditioning system further comprises a second bypass pipeline arranged between the main high-pressure gas pipe (P3) and the main low-pressure gas pipe (P2), and a gas bypass solenoid valve (9) and a throttling unit (10) are arranged in series in the second bypass pipeline.

7. A control method of the mode switcher of the heat recovery multi-split air conditioning system of claim 1, **characterized in that** the control method comprises at least one of the following steps:
upon receiving a switching instruction of switching from a cooling mode to a heating mode, controlling the low-pressure electronic expansion valve (2) to gradually decrease the opening degree at a preset step size, until the low-pressure electronic expansion valve (2) is closed; and then controlling the high-pressure electronic expansion valve (3) to be opened, adjusting the high-pressure electronic expansion valve to a preset initial opening degree, and after maintaining the preset initial opening degree for a preset time length, causing the high-pressure electronic expansion valve (3) to gradually increase the opening degree at the preset step size, until the high-pressure electronic expansion valve (3) is opened to a maximum opening degree;
upon receiving a switching instruction of switching from the heating mode to the cooling mode, causing the high-pressure electronic expansion valve (3) to gradually decrease the opening degree at a preset step size, until the high-pressure electronic expansion valve (3) is closed; and then causing the low-pressure electronic expansion valve (2) to be opened, adjusting the low-pressure electronic expansion valve to a preset initial opening degree, and after maintaining the preset initial opening degree for a preset time length, causing the low-pressure electronic expansion valve (2) to gradually increase the opening degree at the preset step size, until the low-pressure electronic expansion valve (2) is opened to a maximum opening degree.

8. The control method according to claim 7, **characterized in that** the mode conversion branch (B1, B2, BN, B11, B1N, BN1, BNN) further comprises a high-pressure solenoid valve (5) and a low-pressure solenoid valve (4), and the high-pressure solenoid valve (5) and the low-pressure solenoid valve (4) are respectively connected in parallel with the high-pressure electronic expansion valve (3) and the low-pressure electronic expansion valve (2) through bypass pipelines; and the control method further comprises:
upon receiving the switching instruction of switching from the cooling mode to the heating mode, causing the low-pressure solenoid valve (4) to be closed, and opening the high-pressure solenoid valve (5) when causing the high-pressure electronic expansion valve (3) to be opened to the maximum opening degree; or
upon receiving the switching instruction of switching from the heating mode to the cooling mode, causing the high-pressure solenoid valve (5) to be closed, and opening the low-pressure solenoid valve (4) when causing the low-pressure electronic expansion valve (2) to be opened to the maximum opening degree.

## Patentansprüche

1. Multi-Split-Klimaanlage mit Wärmerückgewinnung, die eine Außeneinheit (0), mindestens eine Inneneinheit und einen Modusumschalter umfasst, wobei der Modusumschalter mindestens einen Modusumwandlungszweig (B1, B2, BN, B11, BIN, BN1, BNN) umfasst, die Außeneinheit (0) mit verschiedenen Modusumwandlungszweigen (B1, B2, BN, B11), BIN, BN1, BNN) im Modusumschalter durch ein Hauptflüssigkeitsohr (PI), ein Haupthochdruckgasrohr (P3) und ein Hauptniederdruckgasrohr (P2) verbunden ist und die Modusumwandlungszweige (B1, B2, BN, B11, BIN, BN1, BNN) mit einer entsprechenden Inneneinheit durch ein Zweigflüssigkeitsrohr (P4) und ein Zweiggasrohr (P5) verbunden sind, und
wobei der Modusumwandlungszweig (B1, B2, BN, B11, BIN, BN1, BNN) Folgendes umfasst: eine Flüssigkeitsrohrsektion, eine Hochdruck-Gasrohrsektion und eine Niederdruck-Gasrohrsektion, wobei beide Enden der Flüssigkeitsrohrsektion jeweils mit dem Hauptflüssigkeitsrohr (PI) und dem Zweigflüssigkeitsrohr (P4) verbunden sind, ein Ende der Hochdruck-Gasrohrsektion und ein Ende der Niederdruck-Gasrohrsektion jeweils mit dem Haupthochdruckgasrohr (P3) und dem Hauptniederdruckgasrohr (P2) verbunden sind, ein anderes Ende der Hochdruck-Gasrohrsektion und ein anderes Ende der Niederdruck-Gasrohrsektion beide mit dem Zweiggasrohr (P5) verbunden sind, der Modusumschalter ferner ein elektronisches Hochdruck-Expansionsventil (3) und ein elektronisches Niederdruck-Expansionsventil (2) umfasst, das elektronische Hochdruck-Expansionsventil (3) und das elektronische Niederdruck-Expansionsventil (2) jeweils in Reihe in der Hochdruck-Gasrohrsektion und der Niederdruck-Gasrohrsektion angeordnet sind,
wobei das elektronische Hochdruck-Expansionsventil (3) und das elektronische Niederdruck-Expansionsventil (2) so konfiguriert sind, dass sie beim Umschalten des Klimatisierungsmodus allmählich geöffnet und geschlossen werden, um einen Differenzdruck zwischen vor und nach einem Modusumwandlungsvorgang zu reduzieren, **dadurch gekennzeichnet, dass**
die Flüssigkeitsrohrsektion ferner mit einem Unterkühlungsrohr (6) in Reihe geschaltet ist, die Multi-Split-Klimaanlage mit Wärmerückgewinnung ferner eine erste Bypass-Pipeline umfasst, die vom Hauptflüssigkeitsrohr (P1) zum Hauptniederdruckgasrohr (P2) geführt wird, die erste Bypass-Pipeline mit dem Unterkühlungsrohr (6) verbunden ist und einen internen Wärmetauscher zum Durchführen von Wärmeaustausch bildet, und
ein Filter (7) und eine Unterkühlungsdrosseleinheit (8) in Reihe in der ersten Bypass-Pipeline angeordnet sind.

2. Multi-Split-Klimaanlage mit Wärmerückgewinnung nach Anspruch 1, **dadurch gekennzeichnet, dass** der Modusumwandlungszweig (B1, B2, BN, B11, BIN, BN1, BNN) ferner ein Hochdruck-Magnetventil (5) und ein Niederdruck-Magnetventil (4) umfasst und das Hochdruck-Magnetventil (5) und das Niederdruck-Magnetventil (4) jeweils mit dem elektronischen Hochdruck-Expansionsventil (3) und dem elektronischen Niederdruck-Expansionsventil (2) über Bypass-Pipelines parallel geschaltet sind.

3. Multi-Split-Klimaanlage mit Wärmerückgewinnung nach Anspruch 1, **dadurch gekennzeichnet, dass** die Flüssigkeitsrohrsektion mit dem Unterkühlungsrohr (6) in Reihe geschaltet ist, um Wärmeaustausch an einem Kältemittel der Flüssigkeitsrohrsektion (P1) und einem Kältemittel durchzuführen, das vom Hauptflüssigkeitsrohr (PI) zum Hauptniederdruckgasrohr (P2) geführt wird.

4. Multi-Split-Klimaanlage mit Wärmerückgewinnung nach Anspruch 1, **dadurch gekennzeichnet, dass** alle Modusumwandlungszweige (B1, B2, BN, B11, BIN, BN1, BNN) parallel, in Serie oder in seriell-paralleler Form durch das Hauptflüssigkeitsrohr (P1), das Haupthochdruckgasrohr (P3) und das Hauptniederdruckgasrohr (P2) verbunden sind.

5. Multi-Split-Klimaanlage mit Wärmerückgewinnung nach Anspruch 1, **dadurch gekennzeichnet, dass** ein Schalldämpfer (1) auf mindestens einer Seite des Haupthochdruckgasrohrs (P3) und des Hauptniederdruckgasrohrs (P2) in Verbindung mit dem Modusumschalter angeordnet ist.

6. Multi-Split-Klimaanlage mit Wärmerückgewinnung nach Anspruch 1, **dadurch gekennzeichnet, dass** die Multi-Split-Klimaanlage mit Wärmerückgewinnung ferner eine zweite Bypass-Pipeline umfasst, die zwischen dem Haupthochdruckgasrohr (P3) und dem Hauptniederdruckgasrohr (P2) angeordnet ist, und ein Gas-Bypass-Magnetventil (9) und eine Drosseleinheit (10) in Reihe in der zweiten Bypass-Pipeline angeordnet sind.

7. Steuerverfahren des Modusumschalters der Multi-Split-Klimaanlage mit Wärmerückgewinnung nach Anspruch 1, **dadurch gekennzeichnet, dass** das Steuerverfahren mindestens einen der folgenden Schritte beinhaltet:
Steuern, nach Empfang eines Schaltbefehls zum Umschalten von einem Kühlmodus in einen Heizmodus, des elektronischen Niederdruck-Expansionsventils (2), um den Öffnungsgrad mit einer voreingestellten Schrittgröße allmählich zu verringern, bis das elektronische Niederdruck-Expansionsventil (2) geschlossen ist; und dann Steuern zum Öffnen des elektronischen Hochdruck-Expansionsventils (3), Einstellen des elektronischen Hochdruck-Expansionsventils auf einen voreingestellten anfänglichen Öffnungsgrad und Bewirken, nach dem Beibehalten des voreingestellten anfänglichen Öffnungsgrads für eine voreingestellte Zeitdauer, dass das elektronische Hochdruck-Expansionsventil (3) den Öffnungsgrad mit der voreingestellten Schrittgröße allmählich erhöht, bis das elektronische Hochdruck-Expansionsventil (3) bis zu einem maximalen Öffnungsgrad geöffnet ist;
Bewirken, nach Empfang eines Schaltbefehls zum Umschalten vom Heizmodus in den Kühlmodus, dass das elektronische Hochdruck-Expansionsventil (3) den Öffnungsgrad mit einer voreingestellten Schrittgröße allmählich verringert, bis das elektronische Hochdruck-Expansionsventil (3) geschlossen ist; und dann Bewirken, dass das elektronische Niederdruck-Expansionsventil (2) geöffnet wird, Einstellen des elektronischen Niederdruck-Expansionsventils auf einen voreingestellten anfänglichen Öffnungsgrad, und Bewirken, nach dem Beibehalten des voreingestellten anfänglichen Öffnungsgrads für eine voreingestellte Zeitdauer, dass das elektronische Niederdruck-Expansionsventil (2) den Öffnungsgrad mit der voreingestellten Schrittgröße allmählich erhöht, bis das elektronische Niederdruck-Expansionsventil (2) bis auf einen maximalen Öffnungsgrad geöffnet ist.

8. Steuerverfahren nach Anspruch 7, **dadurch gekennzeichnet, dass** der Modusumwandlungszweig (B1, B2, BN, B11, BIN, BN1, BNN) ferner ein Hochdruck-Magnetventil (5) und ein Niederdruck-Magnetventil (4) umfasst, und das Hochdruck-Magnetventil (5) und das Niederdruck-Magnetventil (4) jeweils parallel mit dem elektronischen Hochdruck-Expansionsventil (3) und dem elektronischen Niederdruck-Expansionsventil (2) über Bypass-Pipelines verbunden sind; und das Steuerverfahren ferner Folgendes beinhaltet:
Bewirken, nach Empfang des Schaltbefehls zum Umschalten vom Kühlmodus in den Heizmodus, dass das Niederdruck-Magnetventil (4) geschlossen wird, und Öffnen des Hochdruck-Magnetventils (5), wenn bewirkt wird, dass das elektronische Hochdruck-Expansionsventil (3) bis zum maximalen Öffnungsgrad geöffnet wird; oder
Bewirken, nach Empfang des Schaltbefehls zum Umschalten vom Heizmodus in den Kühlmodus, dass das Hochdruck-Magnetventil (5) geschlossen wird, und Öffnen des Niederdruck-Magnetventil (4), wenn bewirkt wird, dass das elektronische Niederdruck-Expansionsventil (2) bis zum maximalen Öffnungsgrad geöffnet wird.

## Revendications

1. Système de climatisation multibloc à récupération de chaleur comprenant une unité extérieure (O), au moins une unité intérieure et un commutateur de mode, dans lequel le commutateur de mode comprend au moins un branchement de conversion de mode (B1, B2, BN, B11,B1N, BN1, BNN), l'unité extérieure (O) est raccordée à plusieurs branchements de conversion de mode (B1, B2, BN, B11, B1N, BN1, BNN) dans le commutateur de mode à travers un tuyau de liquide principal (P1), un tuyau de gaz haute pression principal (P3) et un tuyau de gaz basse pression principal (P2), et les branchements de conversion de mode (B1, B2, BN, B11, B1N, BN1, BNN) sont raccordés à une unité intérieure correspondante à travers un tuyau de liquide de branchement (P4) et un tuyau de gaz de branchement (P5), et
dans lequel le branchement de conversion de mode (B1, B2, BN, B11, B1N, BN1, BNN) comprend : une section de tuyau de liquide, une section de tuyau de gaz haute pression et une section de tuyau de gaz basse pression, les deux extrémités de la section de tuyau de liquide sont respectivement raccordées au tuyau de liquide principal (P1) et au tuyau de liquide de branchement (P4), une extrémité de la section de tuyau de gaz haute pression et une extrémité de la section de tuyau de gaz basse pression sont respectivement raccordées au tuyau de gaz haute pression principal (P3) et au tuyau de gaz basse pression principal (P2), une autre extrémité de la section de tuyau de gaz haute pression et une autre extrémité de la section de tuyau de gaz basse pression sont raccordées toutes les deux au tuyau de gaz de branchement (P5), le commutateur de mode comprend en outre une valve de détente électronique haute pression (3) et une valve de détente électronique basse pression (2), la valve de détente électronique haute pression (3) et la valve de détente électronique basse pression (2) sont respectivement arrangées en série dans la section de tuyau de gaz haute pression et dans la section de tuyau de gaz basse pression,
dans lequel la valve de détente électronique haute pression (3) et la valve de détente électronique basse pression (2) sont configurées pour être graduellement ouvertes et fermées durant la commutation du mode de climatisation afin de réduire une pression différentielle entre avant et après une opération de conversion de mode,
**caractérisé en ce que** la section de tuyau de liquide est raccordée en outre en série à un tuyau de superfusion (6), le système de climatisation multibloc à récupération de chaleur comprend en outre une première tuyauterie de dérivation allant du tuyau de liquide principal (P1) au tuyau de gaz basse pression principal (P2), la première tuyauterie de dérivation est raccordée au tuyau de superfusion (6) établissant un échangeur de chaleur interne pour effectuer un échange de chaleur, et un filtre (7) et une unité d'étranglement de superfusion (8) sont arrangés en série dans la première tuyauterie de dérivation.

2. Système de climatisation multibloc à récupération de chaleur selon la revendication 1, **caractérisé en ce que** le branchement de conversion de mode (B1, B2, BN, B11, B1N, BN1, BNN) comprend en outre une électrovanne haute pression (5) et une électrovanne basse pression (4), et l'électrovanne haute pression (5) et l'électrovanne basse pression (4) sont respectivement raccordées en parallèle à la valve de détente électronique haute pression (3) et à la valve de détente électronique basse pression (2) à travers des tuyauteries de dérivation.

3. Système de climatisation multibloc à récupération de chaleur selon la revendication 1, **caractérisé en ce que** la section de tuyau de liquide est raccordée en série au tuyau de superfusion (6) de manière à effectuer un échange de chaleur sur un réfrigérant de la section de tuyau de liquide (P1) et sur un réfrigérant allant du tuyau de liquide principal (P1) au tuyau de gaz basse pression principal (P2).

4. Système de climatisation multibloc à récupération de chaleur selon la revendication 1, **caractérisé en ce que** tous les branchements de conversion de mode (B1, B2, BN, B11,B1N, BN1, BNN) sont raccordés en parallèle, en série, ou en forme en série-parallèle à travers le tuyau de liquide principal (P1), le tuyau de gaz haute pression principal (P3) et le tuyau de gaz basse pression principal (P2).

5. Système de climatisation multibloc à récupération de chaleur selon la revendication 1, **caractérisé en ce qu'**un silencieux (1) est arrangé sur un côté au moins du tuyau de gaz haute pression principal (P3) et du tuyau de gaz basse pression principal (P2) raccordant le commutateur de mode.

6. Système de climatisation multibloc à récupération de chaleur selon la revendication 1, **caractérisé en ce que** le système de climatisation multibloc à récupération de chaleur comprend en outre une deuxième tuyauterie de dérivation arrangée entre le tuyau de gaz haute pression principal (P3) et le tuyau de gaz basse pression principal (P2), et une électrovanne de dérivation de gaz (9) et une unité d'étranglement (10) sont arrangées en série dans la deuxième tuyauterie de dérivation.

7. Procédé de commande du commutateur de mode du système de climatisation multibloc à récupération de chaleur selon la revendication 1, **caractérisé en ce que** le procédé de commande comprend au moins l'une des étapes suivantes consistant à :
en recevant une instruction de commutation de commuter d'un mode de refroidissement à un mode de chauffage, commander la valve de détente électronique basse pression (2) pour réduire graduellement le degré d'ouverture à un pas de progression préréglé, jusqu'à ce que la valve de détente électronique basse pression (2) soit fermée ; et puis commander la valve de détente électronique haute pression (3) pour qu'elle s'ouvre, ajuster la valve de détente électronique haute pression à un degré d'ouverture initial préréglé, et après avoir maintenu le degré d'ouverture initial préréglé pendant une longueur de temps préréglée, faire que la valve de détente électronique haute pression (3) augmente graduellement le degré d'ouverture au pas de progression préréglé, jusqu'à ce que la valve de détente électronique haute pression (3) soit ouverte à un degré d'ouverture maximal ;
en recevant une instruction de commutation de commuter du mode de chauffage au mode de refroidissement, faire que la valve de détente électronique haute pression (3) réduise graduellement le degré d'ouverture à un pas de progression préréglé, jusqu'à ce que la valve de détente électronique haute pression (3) soit fermée ; et puis faire que la valve de détente électronique basse pression (2) s'ouvre, ajuster la valve de détente électronique basse pression à un degré d'ouverture initial préréglé, et après avoir maintenu le degré d'ouverture initial préréglé pendant une période de temps préréglée, faire que la valve de détente électronique basse pression (2) augmente graduellement le degré d'ouverture à un pas de progression préréglé jusqu'à ce que la valve de détente électronique basse pression (2) soit ouverte à un degré d'ouverture maximal.

8. Procédé de commande selon la revendication 7, **caractérisé en ce que** le branchement de conversion de mode (B1, B2, BN, B11, B1N, BN1, BNN) comprend en outre une électrovanne haute pression (5) et une électrovanne basse pression (4), et l'électrovanne haute pression (5) et l'électrovanne basse pression (4) sont respectivement raccordées en parallèle à la valve de détente électronique haute pression (3) et à la valve de détente électronique basse pression (2) à travers des tuyauteries de dérivation ; et le procédé de commande comprend en outre :
en recevant l'instruction de commutation de commuter du mode de refroidissement au mode de chauffage, faire que l'électrovanne basse pression (4) soit fermée, et ouvrir l'électrovanne haute pression (5) en faisant que la valve de détente électronique haute pression (3) soit ouverte à un degré d'ouverture maximal ; ou bien
en recevant l'instruction de commutation de commuter du mode de chauffage au mode de refroidissement, faire que l'électrovanne haute pression (5) soit fermée, et ouvrir l'électrovanne basse pression (4) en faisant que la valve de détente électronique basse pression (2) soit ouverte à un degré d'ouverture maximal.
